# EUROPÄISCHE PATENTSCHRIFT

(11) **EP 1 369 589 B1**
(45) Veröffentlichungstag und Bekanntmachung des Hinweises auf die Patenterteilung: **10.08.2011**
(21) Anmeldenummer: 03002960.7
(22) Anmeldetag: 11.02.2003
(51) Int. Cl.: F04C 15/00

(54) **Hydraulische Antriebsmaschine mit integrierter Bremse**
System with a hydraulic motor having a brake
Ensemble d'un moteur hydraulique et d'un frein

(30) Priorität: 05.06.2002 DE 20208697 U
(43) Veröffentlichungstag der Anmeldung: 10.12.2003
(73) Patentinhaber: BÜMACH ENGINEERING INTERNATIONAL B.V., 7826 TA Emmen (NL)
(72) Erfinder: Büter, Josef, 49733 Haren/Altenberge (DE)
(74) Vertreter: Weihrauch, Frank

(56) Entgegenhaltungen:
- EP-A1- 0 931 936
- DE-T2- 69 513 585

## Beschreibung

Die Erfindung bezeichnet eine Bremse, die eine rotierende Masse am Abtrieb einer hydraulischen Antriebsmaschine sicher abbremsen und halten kann.

In der Gerätetechnik und im allgemeinen Maschinenbau werden häufig radial oder axial wirkende Bremsen eingesetzt. Die kinetische Energie der rotierenden Masse wird dabei in eine andere Form umgewandelt, wodurch die Umlaufgeschwindigkeit bis zum Stillstand verringert und schließlich die Masse in der Endposition gehalten wird. Je nach Anwendungszweck kommen spezifisch ausgebildete Bremssysteme zum Einsatz. Bei hydraulischen Antriebsmaschinen sind überwiegend mechanische Reibbremsen im Einsatz. Diese sind ähnlich einer Kupplung bzw. Scheibenbremse aufgebaut, wobei die Rotationsenergie mittels einer, mit der Rotorachse gekoppelten Scheibe und einem fest stehenden Teil der Antriebsmaschine über Reibflächen umgewandelt wird. Die. unter Federvorspannung stehende Scheibe hält die Achse des Antriebs in der nach dem Abbremsen eingenommenen Position. Bremssysteme können entweder direkt mit der Antriebsmaschine gekoppelt, integraler Bestandteil oder auch in Form einer Kupplungsbremseinheit mit der Antriebsmaschine verbunden sein.
Aus dem Stand der Technik sind eine Vielzahl von Lösungen für hydraulische Antriebsmaschinen mit mechanischem Bremssystem bekannt, die einen Hydromotor und ein mechanisches Bremssystem in Form einer Scheibenbremse mit einer Feder-Kolben-Anordnung aufweisen. Bei anliegendem Arbeitsdruck eines Fluids ist die Bremse gegen die. Federvorspannung gelöst und bei fehlendem Arbeitsdruck wirkt diese als Feststellbremse.
Auf diesem Prinzip basiert auch die in der Druckschrift DE 695 13 585 T2 (die den Oberbegriff von Anspruch 1 offenbart) beschriebene hydraulische Anlage, die ein Hydrauliksystem mit einem Hydromotor und einem mechanischen Bremssystem, bestehend aus Bremskolben und zwei Bremsklötzen, aufweist. Der Bremskolben und die Bremsklötze sind am Gehäuse bzw. der Rotorwelle befestigt, der Bremskolben steht unter Federvorspannung. Bei fehlendem Druck in Haupthydraulikkammer wird die Rotorwelle gebremst und bei Lieferung des Treibmittels zur Haupthydraulikkammer der Bremskolben gleichzeitig gelöst. Zur Ansteuerung der Rotorbremse werden speziell angeordnete Wege- und Ausgleichsventilen eingesetzt.

Die Druckschrift DE 197 55 156 A1 offenbart einen Radialkolbenmotor mit Reibschlussbremse, deren Bremskörper sich teilweise in einer axialen Aussparung im Rotor befindet. Die Reibschlussbremse kann eine Feder-Kolben-Anordnung aufweisen und bei fehlendem Arbeitsdruck durch Federkraft anliegen sowie mit anliegendem Arbeitsdruck gelöst werden.

Aus den Druckschriften DE 41 04 712 C2, DE 28 23 038 C2, DE 43 25 315 A1, US 3,863,038 und DE 43 11 997 C2 sind weitere spezielle Lösungen für Hydraulikmotoren mit integrierten Bremsen in Feder-Kolben-Anordnung und deren Ansteuerung bekannt, deren Bremse bei fehlendem Arbeitsdruck eine Bremswirkung ausübt sowie bei anliegendem Arbeitsdruck gelöst wird.

Auch mit der Druckschrift DE 31 27 439 C2 wird eine Abbremsvorrichtung für einen Hydromotor mit Feststellbremse in Feder-Kolben-Anordnung offenbart, die genau zu dem Zeitpunkt wirkt, in dem der Hydromotor zum Stillstand kommt. Im Zulauf ist ein erstes Rückschlagventil und im Rücklauf ein vom Druck des Zulaufs und des Rücklaufs gesteuertes erstes Bremsventil angeordnet ist, das unter Einbeziehung eines Wechselventils den jeweils höheren Druck des Fluids erhält, wodurch die Feststellbremse bei anliegendem Druck gelöst ist.

Allen genannten Lösungen gemeinsam ist, dass das Lösen der Bremse gegen die Federvorspannung gleichzeitig mit dem ansteigendem Arbeitsdruck des Fluids erfolgt. Ein definierter Mindestdruck, damit der Zeitpunkt zum Lösen der Bremse in Bezug auf das vom Hydromotor entsprechend dem Arbeitsdruck des Fluids jeweils abgebbare Drehmoment, ist nicht vorbestimmbar, da dieser im Wesentlichen von der Federvorspannung der Bremse bestimmt wird. Nachteilig ist auch, dass derartige hydraulische Bremssysteme eine direkte Lastabhängigkeit mit den damit verbundenen Schwankungen des Beschleunigungs- und Bremsverhaltens aufweisen, die nur mit hohem steuer- und regeltechnischem Aufwand eingeschränkt werden können.

Die Aufgabe der Erfindung besteht darin, eine einfach aufgebaute hydraulische Antriebsmaschine mit integrierter Bremse zu entwickeln, deren Ansteuerung ausschließlich durch den Betriebsdruck des Arbeitsmediums, ohne zusätzliche Hilfsenergien erfolgt, wobei eine rotierende Masse am Abtrieb nach Ausfall oder Abschaltung des Betriebsdrucks für die hydraulische Antriebsmaschine sicher zum Stillstand gebracht und in der letzten Position gehalten wird sowie keine lastabhängigen Schwankungen des Beschleunigungs- bzw. Verzögerungsverhaltens aufweist als auch in beiden Drehrichtungen wirksam ist.

Die Aufgabe wird durch die im Schutzanspruch 1 aufgeführten Merkmale gelöst. Bevorzugte Weiterbildungen ergeben sich aus den Unteransprüchen.

Eine hydraulische Antriebsmaschine, beispielsweise in Form eines zweihubigen Flügelzellenrotors, die ausschließlich durch den Druck des Arbeitsmediums gesteuert, bei Ausfall oder Abschalten desselben eine rotierende Masse an deren Abtrieb zum sicheren Stillstand bringt, weist, auf seiner rotierenden Hauptachse eine, über Passfedern formschlüssig gekoppelte, axial verschiebbare Buchse mit einem scheibenförmigen Reibbelagsträger auf. Dieser scheibenförmige Reibbelagsträger ist Bestandteil einer einflächigen Reibungsbremse, der durch die Wirkung einer Feder gegen einen feststehenden Reibbelag, der mit dem Rotorgehäuse verbunden ist, gedrückt wird. Die axial verschiebbare Buchse ist gleichzeitig Träger eines Entriegelungskolbens, wobei dieser zusammen mit einem Teil des Außengehäuse des Rotors einen Entriegelungsarbeitszylinder ausbildet. Der Entriegelungskolben ist formschlüssig mit der axial verschiebbaren Buchse verbunden. Es besteht auch die Möglichkeit die axial verschiebbare Buchse selbst als Entriegelungskolben auszubilden.

In einem Teil des Außengehäuses der hydraulischen Antriebsmaschine sind durch Federn vorgespannte Steuerventile, Steuerschieber und Rückschlagventile angeordnet, mittels deren Zusammenwirken der Ölstrom so geführt wird, dass die Beaufschlagung der Flügelzellenpumpe als hydraulischer Rotor erst erfolgt, wenn die Entriegelung der Bremse durch den anliegenden Druck des Fluids als Arbeitsmedium erfolgt ist. Bei Ausfall oder Absinken des Betriebsdrucks erzeugt die Bremse mittels der Federvorspannung das erforderliche Haltemoment, um eine rotierende Masse abzubremsen, zum Stillstand zu bringen und in der letzten Position zu halten. Über das Verhältnis zwischen den Größen der Federvorspannungen der Steuerventile und denen der Steuerschieber ist der Lösezeitpunkt der Bremse definiert vorbestimmbar.

Die Bremse ist integrierter Bestandteil einer hydraulischen Antriebsmaschine. Die Ansteuerung erfolgt ohne zusätzliche Hilfsenergien, nur über die üblichen Anschlüsse für Vorund Rücklauf des Druckfluids.

Durch einen symmetrischen Aufbau des Steuerungssystems mit den Steuerventilen, Steuerschiebern und Rückschlagventilen sowie den zugeordneten Leitungen und Kanälen bleibt die Funktionalität der Bremse in vollem Umfang erhalten, auch wenn die Drehrichtung des hydraulischen Rotors durch entgegengesetzte Druckverhältnisse an den Anschlüssen der hydraulischen Antriebsmaschine geändert wird.
Die Vorteile der Erfindung bestehen insbesondere in der Ansteuerung der Bremse durch den Arbeitsdruck des Fluid zum Antrieb des Hydromotors ohne zusätzliche Hilfsenergie. Der Zeitpunkt für das Lösen der Bremse ist durch die Wahl der Größe der Federvorspannung für die Steuerventile und Steuerschieber in Abhängigkeit vom Arbeitsdruck des Fluids und der Federvorspannung der Bremse festleg- bzw. einstellbar. Mit unterschiedlich gewählten Federvorspannungen für den jeweils in eine Drehrichtung zum Lösen der Bremse wirkenden Steuerschieber und des Steuerventils für das Druckbeaufschlagen des Rotors lassen sich gezielt unterschiedliche Beschleunigungs- und Bremscharacteristica für beide Drehrichtungen separat vorgeben.
Die sonst bei hydraulischen Antrieben mit Bremse in Feder-Kolben-Anordnung üblichen, lastabhängigen Schwankungen des Beschleunigungs- und Bremsverhaltens werden ohne,zusätzlichen Aufwand vermieden.

Die Erfindung wird als Ausführungsbeispiel an Hand von
- Fig. 1: als einen Halbschnitt durch die hydraulische Antriebsmaschine mit Rotor und Bremse;
- Fig. 2: als Schnitt durch das Außengehäuse mit den Hauptanschlüssen und Kanalführungen in der Ebene der Steuerschieber und vorgespannten Rückschlagventile
näher erläutert.

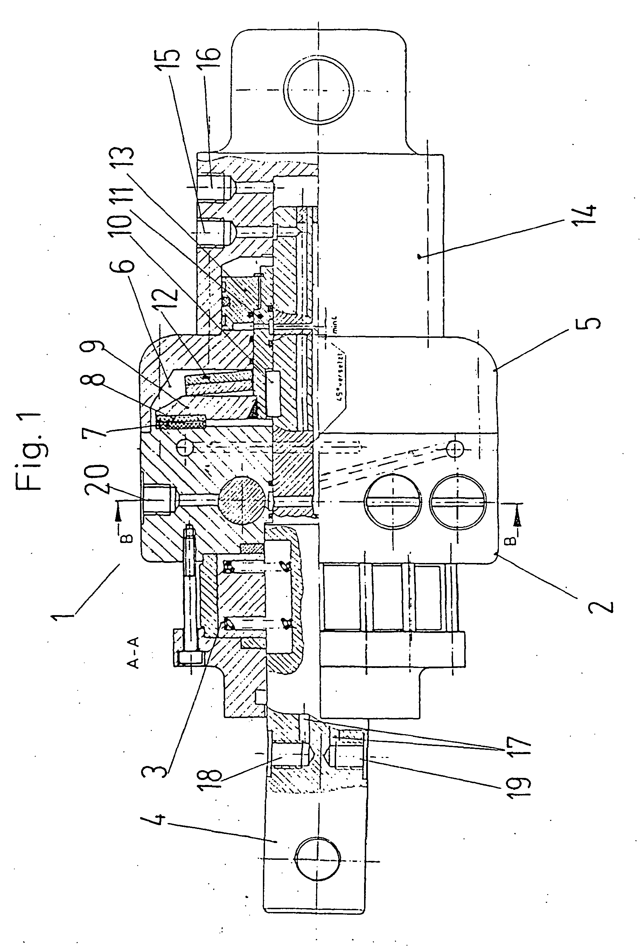

Nach Fig. 1 weist eine hydraulische Antriebsmaschine 1 ein geteiltes Außengehäuse auf, in dessen linkem Teil 2 die Baugruppe eines bekannten zweihubigen hydraulischen Rotors 3 mit einer Rotorwelle 4 und in dessen rechtem Teil 5 die Baugruppe einer Scheibenbremseinheit 6 angeordnet sind. Am linken Teil 2 ist ein mit diesem fest verbundener erster Reibbelag 7 angeordnet, der mit einem zweiten Reibbelag 8 der Scheibenbremseinheit 6 auf einem Reibbelagsträger 9, der mit einer, auf der Rotorwelle 4 axial verschiebbaren, mittels einer Passfeder 10, formschlüssig mit dieser gekoppelten Buchse 11 fest verbunden ist und entsprechend mit der Rotorwelle 4 umläuft, wobei eine zwischen der Innenwandung des rechten Teils 5 und dem Reibbelagsträger 9 befindliche Tellerfeder 12 den zweiten Reibbelag 8 mit einer definierten Vorspannung gegen den feststehenden ersten Reibbelag 7 drückt und so das erforderliche Haltemoment der Bremse bewirkt. Die Drehung der Rotorwelle 4 kann erst erfolgen, wenn der Reibbelagsträger 9 gegen die Vorspannung der Tellerfeder 12 axial verschoben worden ist und die Reibbeläge 7; 8 nicht mehr im Eingriff sind. Das Verschieben des Reibbelagsträger 9 erfolgt mittels eines, mit der Buchse 11 formschlüssig gekoppelten Entriegelungskolbens 13, der in einem, an das rechte Teil 5 des Außengehäuses der hydraulischen Antriebsmaschine angeflanschtem Kolbengehäuse 14 gelagert ist.
Das angeflanschte Kolbengehäuse 14 kann optional auch dazu genutzt werden, um mittels eines zusätzlichen Druckanschlusses 15 und eines zusätzlichen Ablaufanschlusses 16, die über Kanäle 17 in der Rotorwelle 4 mit einem druckführenden Anschluss 18 und einem ablauforientierten Anschluss 19 an der Abtriebsseite der Rotorwelle 4 verbunden sind, ein hydraulisch betätigtes Aggregat, beispielsweise einen Greifer einer Krananlage, das mit der Rotorwelle 4 gekoppelt ist, in bekannter Weise zu betreiben.
Im linken Teil 2 des Außengehäuses der hydraulischen Antriebsmaschine 1 ist ein Steuerungssystem zum funktionssicheren Schalten des hydraulischen Rotors 3 und der Scheibenbremseinheit 6 in Verbindung mit dem Entriegelungskolben 13 untergebracht.
Ein druckführender Rotoranschluss 20 und einen ablauforientierter Rotoranschluss stellen die Zu- und Abführung des Druckfluids sicher.

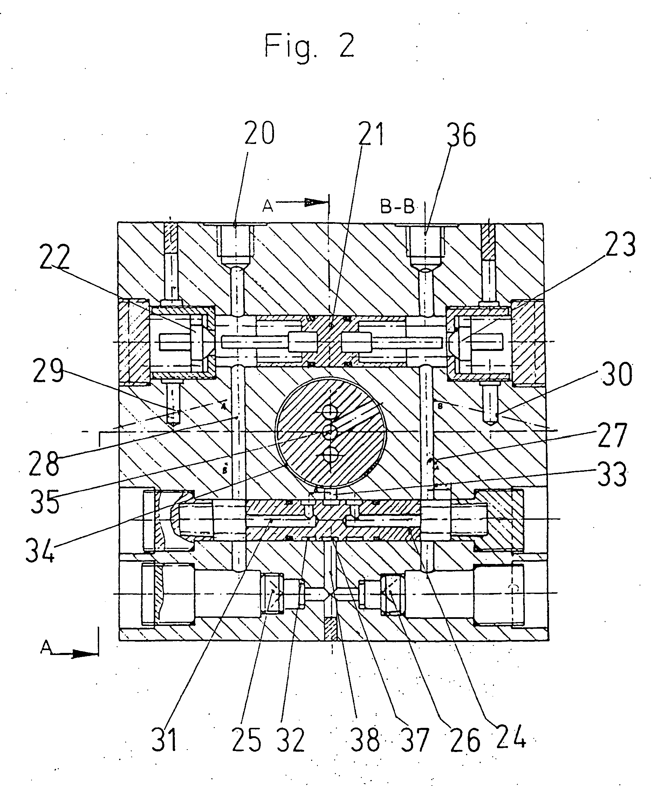

Wie in Fig. 2 gezeigt, besteht das Steuerungssystem im Wesentlichen aus einem Kegelsteuerschieber 21, der einen unter Federvorspannung stehenden Ventilkegel im linken Kegelventil 22 bzw. einen unter Federvorspannung stehenden Ventilkegel im rechten Kegelventil 23 betätigt, einem Verschlusssteuerschieber 24 sowie einem linken Rückschlagventil 25 und einem rechten Rückschlagventil 26. Der Kegelsteuerschieber 21 als auch der Verschlusssteuerschieber 24 werden im drucklosen Zustand jeweils mittels beidseitig angeordneten Druckfedern in Mittelstellung positioniert. Die zur Erläuterung der Funktion des Steuerungssystems erforderlichen Kanäle und Leitungen, wie eine vertikale Ablaufleitung 27; eine vertikale Druckleitung 28; ein linker Verbindungskanal 29 zu den üblichen Rotorzuläufen; ein rechter Verbindungskanal 30 zu den Rotorabläufen; ein im Verschlusssteuerschieber 24 vorhandener Zuführungskanal 31 sowie ein linker Ringkanal 32; eine Verbindungsbohrung 33 zu einem Umlaufkanal 34, der über eine Mittelleitung 35 in der Rotorwelle 4 zum Kolbenraum des Entriegelungskolbens 13 führt; gehen ebenfalls aus Fig. 2 hervor.
Mit Beaufschlagung des druckführenden Rotoranschluss 20 wird der Kegelsteuerschieber 21 so weit verschoben, dass das rechte Kegelventil 23 geöffnet ist und durch den Druckaufbau über die vertikale Druckleitung 28 der Verschlusssteuerschieber 24 zugleich in seine rechte Endposition verschoben, wodurch die vertikale Ablaufleitung 27 gesperrt wird. Das linke Kegelventil 22 bleibt bis zum Anstieg des Drucks des Arbeitsmediums über den, durch die Federvorspannung bestimmten Druck geschlössen. Bei definiert hohem Druck öffnet sich das linke Kegelventil 22, so dass das Arbeitsmedium über den linken Verbindungskanal 29 zu den Rotorzuläufen sowie bereits vorher durch den Zuführungskanal 31 und den linken Ringkanal 32 im Verschlusssteuerschieber . 24, die Verbindungsbohrung 33, den Umlaufkanal 34 und der damit verbundenen Mittelleitung 35 in der Rotorwelle 4 in den Kolbenraum des Entriegelungskolbens 13 geführt wird. Der Entriegelungskolben 13 und der hydraulische Rotor 3 werden somit in einer zeitlichen Abfolge mit dem Druck des Arbeitsmediums beaufschlagt, wobei immer zuerst die Entriegelung erfolgt, bevor die Beaufschlagung des hydraulischen Rotors 3 über das Kegelventil 22 eingeleitet wird. Durch entsprechende Wahl der Federvorspannungen für die Kegelventile 22; 23 ist der Zeitpunkt des Druckbeaufschlagens des hydraulischen Rotors 3 gegenüber dem des Lösens der Bremse durch den Entriegelungskolben 13 vorbestimmbar.
Die axiale Verschiebung der Buchse 11 mit dem Reibbelagsträger 9, als Träger des zweiten Reibbelags 8, gegen die Vorspannung der Tellerfeder 12 mittels des Entriegelungskolbens 13 trennt den zweiten Reibbelag 8 vom ersten Reibbelag 7; die Bremse ist gelöst und die Rotation der Rotorwelle 4 erfolgt.
Der Ablauf des Druckmediums vom hydraulischen Rotor 3 erfolgt von den Rotorabläufen über den rechten Verbindungskanal 30 durch das offene rechte Kegelventil 23 zum ablauforientierten Rotoranschluss 36.
Bei zu niedrigem oder fehlendem Druck des Arbeitsmediums, beispielsweise durch Abschaltung oder eine Havarie, werden der Kegelsteuerschieber 21 und der Verschlusssteuerschieber 24 jeweils mittels der zugeordneten Druckfedern in Mittelstellung positioniert. Die Vorspannung der Tellerfeder 12 bewirkt über die axiale Verschiebung der verbundenen Buchse 11 das Verschieben des mit dieser gekoppelten Entriegelungskolbens 13, wobei das Arbeitsmedium aus dessen Kolbenraum verdrängt, über die Mittelleitung 35 in der Rotorwelle 4, den Umlaufkanal 34, die Verbindungsbohrung 33 und einen mittleren Ringkanal 37 am Verschlusssteuerschieber 24 durch das, mit einem Abführungskanal 38 verbundene, rechte Rückschlagventil 26, die vertikale Ablaufleitung 27 zum ablauforientierten Rotoranschluss 36 geleitet wird.

Die paarweise, symmetrische Anordnung der Kegelventile 22; 23, der Rückschlagventile 25; 26, der vertikalen Ablaufleitung 27 und der vertikalen Druckleitung 28 sowie der Einnahme der Mittelposition des Kegelsteuerschiebers 21 und der Verschlusssteuerschiebers 24, ist es gegeben, den druckführenden Rotoranschluss 20 mit dem ablauforientierten Rotoranschluss 36 zu tauschen. Es ist dann die gleiche Funktionalität der hydraulischen Antriebsmaschine 1 bei entgegengesetzter Drehrichtung der Rotorwelle 4 des hydraulischen Rotors 3 gegeben.

### Verwendete Bezugszeichen

- 1: hydraulische Antriebsmaschine
- 2: linkes Teil
- 3: hydraulischer Rotor
- 4: Rotorwelle
- 5: rechtes Teil
- 6: Scheibenbremseinheit
- 7: erster Reibbelag
- 8: zweiter Reibbelag
- 9: Reibbelagsträger
- 10: Passfeder
- 11: Buchse
- 12: Tellerfeder
- 13: Entriegelungskolben
- 14: Kolbengehäuse
- 15: zusätzlicher Druckanschluss
- 16: zusätzlicher Abflussanschluss
- 17: Kanäle
- 18: druckführender Anschluss
- 19: ablauforientierter Anschluss
- 20: druckführender Rotoranschluss
- 21: Kegelsteuerschieber
- 22: linkes Kegelventil
- 23: rechter Kegelventil
- 24: Verschlusssteuerschieber
- 25: linkes Rückschlagventil
- 26: rechtes Rückschlagventil
- 27: vertikale Ablaufleitung
- 28: vertikale Druckleitung
- 29: linker Verbindungskanal
- 30: rechter Verbindungskanal
- 31: Zuführungskanal
- 32: linker Ringkanal
- 33: Verbindungsbohrung
- 34: Umlaufkanal
- 35: Mittelleitung
- 36: ablauforientierter Rotoranschluss
- 37: mittlerer Ringkanal
- 38: Abführungskanal

## Patentansprüche

1. Hydraulische Antriebsmaschine mit einem hydraulischen Rotor (3) und integrierter Bremse in einem geteilten Aussengehäuse, wobei die Bremse bei Ausfall oder Abschalten des Drucks des Arbeitsmediums eine rotierende Masse an deren Abtrieb zum sicheren Stillstand bringt, mit einem scheibenförmigen Reibbelagsträger (9) mit einem zweiten Reibbelag (8), der durch die Wirkung einer Tellerfeder (12) gegen einen feststehenden ersten Reibbelag (7) am Rotorgehäuse gepresst wird, wobei eine mit einer Rotorwelle (4) über eine Passfeder (10) formschlüssig gekoppelte, axial verschiebbare Buchse (11) gleichzeitig Träger eines formschlüssig mit dieser gekoppelten Entriegelungskolbens (13) ist, **dadurch gekennzeichnet,**
**dass** der Entriegelungskolben (13) in einem, am Außengehäuse der hydraulischen Antriebsmaschine angeflanschten Kolbengehäuse (14) gelagert ist, mit diesem einen Entriegelungsarbeitszylinder ausbildet und
**dass** in einem Teil des geteilten Aussengehäuses, in dem die Baugruppe des hydraulischen Rotors (3) angeordnet ist, ein Steuerungssystem zur druckabhängigen Ansteuerung des Entriegelungskolbens (13) und Druckbeaufschlagung des hydraulischen Rotors (3), im Wesentlichen bestehend aus einem Kegelsteuerschieber (21), einem Kegelventil (22; 23), einem Verschlusssteuerschieber (24) sowie einem Rückschlagventil (25, 26), angeordnet ist.

2. Hydraulische Antriebsmaschine nach Anspruch 1, **dadurch gekennzeichnet,**
**dass** das Steuerungssystem einen symmetrischen Aufbau, mit symmetrischer Ausbildung des Kegelsteuerschiebers (21) und des Verschlusssteuerschiebers (24) mit paarweiser Zuordnung der Kegelventile (22, 23) und Anordnung der Rückschlagventile (25, 26) in Verbindung mit einer vertikalen Ablaufleitung (27), einer vertikalen Druckleitung (28) und einem Abführungskanal (38) aufweist.

3. Hydraulische Antriebsmaschine nach den Ansprüchen 1 und 2, **dadurch gekennzeichnet,**
**dass** das Beschleunigungs- und Bremsverhalten für beide Drehrichtungen der Rotorwelle (4) des hydraulischen Rotors (3) durch die Werte der Federvorspannung der Kegelventile (22, 23)und des Verschlusssteuerschiebers (24) bestimmt ist.

4. Hydraulische Antriebsmaschine nach den Ansprüchen 1 bis 3, **dadurch gekennzeichnet,**
**dass** das Kolbengehäuse (14) einen zusätzlichen Druckanschluss (15) und einen zusätzlichen Ablaufanschluss (16), die über Kanäle (17) in der Rotorwelle (4) mit einem druckführenden Anschluss (18) und einem ablauforientierten Anschluss (19) an der Abtriebsseite der Rotorwelle (4) verbunden sind, aufweist.

## Claims

1. Hydraulic prime mover having a hydraulic rotor (3) and an integrated brake in a divided outer housing, wherein, in the event of failure or shut-off of the pressure of the working medium, the brake brings a rotating mass to a definite standstill at the output thereof, having a disc-shaped friction lining support (9) with a second friction lining (8) which is pressed against a fixed first friction linking (7) on the rotor housing by the effect of a spring washer (12), wherein an axially displaceable bushing (11), which is coupled to a rotor shaft (4) in a form-locking manner by means of an adjusting spring (10), is at the same time a support for an unlocking piston (13) coupled to this bushing in a form-locking manner, **characterised in that**
the unlocking piston (13) is mounted in a piston housing (14) flange-mounted on the outer housing of the hydraulic prime mover, and forms an unlocking working cylinder with this piston housing and
that in a part of the divided outer housing, in which the assembly of the hydraulic rotor (3) is disposed, a control system for pressure-dependent actuation of the unlocking piston (13) and for pressurisation of the hydraulic rotor (3), consisting substantially of a conical control slide (21), a cone valve (22; 23), a control shutter (24) and a non-return valve (25, 26), is disposed.

2. Hydraulic prime mover as claimed in claim 1, **characterised in that** the control system has a symmetrical structure, with the conical control slide (21) and the control shutter (24) being formed in a symmetrical manner with paired allocation of the cone valves (22, 23), and with the non-return valves (25, 26) being arranged in connection with a vertical discharge line (27), a vertical pressure line (28) and a delivery duct (38).

3. Hydraulic prime mover as claimed in claims 1 and 2, **characterised in that** the acceleration and braking behaviour for both directions of rotation of the rotor shaft (4) of the hydraulic rotor (3) is determined by the values of the resilient pretensioning of the cone valves (22, 23) and of the control shutter (24).

4. Hydraulic prime mover as claimed in claims 1 to 3, **characterised in that** the piston housing (14) has an additional pressure connection (15) and an additional discharge connection (16), which are connected via ducts (17) in the rotor shaft (4) to a pressure-carrying connection (18) and a discharge-orientated connection (19) to the output side of the rotor shaft (4).

## Revendications

1. Moteur hydraulique comportant un rotor hydraulique (3) et un frein intégré dans un boîtier divisé, le frein garantissant l'arrêt par friction d'une masse en rotation en cas de défaillance ou de coupure de la pression du fluide hydraulique,
comprenant
un support de garniture de friction (9) en forme de disque ayant une seconde garniture de friction (8) pressée par l'action d'un ressort Belleville (12) contre une première garniture de friction (7), fixe, du boîtier du rotor,
une douille (11) couplée à l'arbre (4) du rotor par une liaison de forme par une clavette (10), cette douille coulissant axialement constituant en même temps le support d'un piston de déverrouillage (13) couplé au support par une liaison par la forme,
**caractérisé en ce que**
le piston de déverrouillage (13) est logé dans un boîtier de piston (14) fixé par bride au boîtier extérieur du moteur hydraulique, ce boîtier de piston formant un vérin de déverrouillage, et
dans une partie du boîtier extérieur divisé dans laquelle se trouve le groupe du rotor hydraulique (3) il y a un système de commande pour commander le piston de déverrouillage (13) en fonction de la pression et solliciter en pression le rotor hydraulique (3), ce système de commande se composant principalement d'un tiroir de commande à cône (21), d'une soupape conique (22, 23), d'un tiroir de commande de fermeture (24) ainsi que d'un clapet d'arrêt (25, 26).

2. Moteur hydraulique selon la revendication 1,
**caractérisé en ce que**
le système de commande présente une construction symétrique, avec une réalisation symétrique du tiroir de commande à cônes (21) et du tiroir de commande de fermeture (24), avec une association appariée des soupapes coniques (22, 23) et avec une disposition des clapets d'arrêt (25, 26) en liaison avec une conduite de sortie verticale (27), une conduite de pression verticale (28) et un canal de sortie (38).

3. Moteur hydraulique selon les revendications 1 et 2,
**caractérisé en ce que**
le comportement à l'accélération et au freinage pour les deux sens de rotation de l'arbre (4) du rotor hydraulique (3) est défini par les valeurs de la précontrainte de ressort des soupapes coniques (22, 23) et du tiroir de commande de fermeture (24).

4. Moteur hydraulique selon les revendications 1 à 3,
**caractérisé en ce que**
le boîtier de piston (14) comporte un branchement de pression (15) supplémentaire et un branchement de sortie (16) supplémentaire, ces branchements étant reliés par des canaux (17) dans l'arbre de rotor (4) à un branchement de pression (18) et un branchement (19) orientés vers la sortie, du côté de sortie de l'arbre de rotor (4).
